# EUROPEAN PATENT SPECIFICATION

(11) **EP 3 488 097 B1**
(45) Date of publication and mention of the grant of the patent: **09.09.2020**
(21) Application number: 17752022.8
(22) Date of filing: 21.07.2017
(51) Int. Cl.: F03D 1/00, F03D 13/20, E04H 12/08, F03D 13/10

(54) **A TOWER FOR A WIND TURBINE**
TURM FÜR EINE WINDTURBINE
TOUR POUR UNE ÉOLIENNE

(30) Priority: 22.07.2016 EP 16180778
(43) Date of publication of application: 29.05.2019
(73) Proprietor: TA Towers ApS, 5250 Odense SV (DK)
(72) Inventor: ANDRESEN, Tom, 8125-407 Vilamoura Algarve (PT)
(74) Representative: Plougmann Vingtoft a/s
(86) International application number: PCT/EP2017/068527
(87) International publication number: WO 2018/015556

(56) References cited:
- WO-A1-2007/095940
- WO-A1-2010/055535
- WO-A1-2012/007069
- JP-A- 2007 120 080

## Description

### FIELD OF THE INVENTION

The present invention relates to a tower preferably a tower for a wind turbine, such as for larger wind turbines, the tower comprising a number of horizontally disposed tubular tower elements each preferably comprising one or more first wall segments having a substantial rectangular projected shape and one or more second wall segments having a non-rectangular projected shape. The first and optionally the second wall segments each comprising at least one bend along the vertical direction of the wall segment and defining two neighbouring flat panels, the bend being provided in a distance from a vertically extending edge of the wall segment so as to provide the wall segment a concave shape. The first wall segments and second wall segments are arranged neighbouring to each to each along their longitudinal edges so as to form a tubular element. A tower according to the invention may provide an excellent platform for arranging a crane - or hoisting equipment in general - on/to the tower, both during set-up and maintenance of a wind turbine

### BACKGROUND OF THE INVENTION

Wind turbine tower often represent large investment both with respect to raw material (metal, concrete or the other materials) as well as exposing challenges when being set-up. Often the height of wind turbine towers exceeds the height an ordinary mobile crane can hoist whereby set-up of such towers requires specially designed cranes.

Towers are generally made from horizontal tower elements which is made from wall segments. As the towers in general is preferred to have the overall shape of a truncated cone, the result is that the wall segments of a tower segment are all identical to each other and are typically shaped as a curved section having a projected area of a trapeze. This has the disadvantage that as the width of such elements becomes smaller with increasing tower height (due to the tapering of the tower), it becomes more and more difficult to exploit e.g. metal plates as such metal often is produced as rolls having a fixed width. Further, as the tower is shaped with substantially circular cross sections, it is impractical to arranged two parallel extending rows of e.g. anchoring means on the tower for use e.g. as anchoring means for a crane moving up and down the tower.

An Example of a wind turbine tower is disclosed in WO2007/095940A1 This tower comprising a number of horizontally disposed tubular tower elements, which each are assembled from a number of identically shaped tower plates which are connected to each other along vertical joints by use of fish plates. In an illustrated embodiment each of the identical tower plates disclosed appears to be made from a trapeze-shaped plate provided with three vertical bends.

Another example of a wind turbine tower is disclosed in JP2007120080A. The disclosed wind turbine tower is made from precast concrete elements and on-site casted elements. The tower is constructed by pre-casting rectangular, plane segments which are arranged with on-site casted triangular, plane segments in between.

A further example of a wind turbine tower is disclosed in WO20127007069A1. The disclosed tower has a number of axially disposed hollow cylindrical tower sections each comprising a number of circumferential disposed alternating first and second tower section segments. A tapering of the tower is provided by overlapping the first and second tower sections segments in circumferential direction wherein the size of the overlapping portions increases in axial direction. The first and second tower sections segments are described as having a rectangular shape and in exceptional cases, the first and the second tower sections may comprise trapezoid or other shapes as well. For the latter (trapezoid or other shapes), the disclosure is silent about how this could be embodied.

Yet a further example of a wind turbine tower is disclosed in WO2010/055535A1. The tower is disclosed as comprising a plurality of superimposed taper sections. Each taper section is disclosed as being conical with a hexagonal cross-section made by assembling four segments. Each of the segments in a segment is disclosed as being shapely identical to each other.

Hence, an improved wind turbine tower would be advantageous, and in particular a more efficient and/or reliable tower construction would be advantageous.

### OBJECT OF THE INVENTION

An object of the present invention is to provide an alternative to the prior art.

In particular, it may be seen as a further object of the invention to provide a tower construction which utilizes the material more economical than the prior art constructions.

In particular, it may be seen as a further object of the present invention to provide a tower which provides a platform or section for movement of a crane along the tower and that solves the above mentioned problems of the prior art.

### SUMMARY OF THE INVENTION

The present invention is defined by the appended claims.

It is noted, that if a wall segment comprising more than one bend, more than two panels are defined.

Further, the tower may comprise a base section, a tower top element (or section), intermediate disposed elements or the like, which may be formed differently from the horizontally disposed tubular tower elements otherwise disclosed herein.

In the present context, terms are used in manner being ordinary to a skilled person. However, some of the terms are elucidated below:
*Projected shape* is preferably used to indicate the projection of a three-dimensional body onto a plane.
*Substantial rectangular projected shape* and *substantial non-rectangular projected* shape is preferably meant that the overall contour of the shape is either rectangular or non-rectangular in the sense that cut-out(s) and/or indent(s) may be provided in the contour, such as cut-outs at corners or along an edge e.g. to reduce the number of layers in an assembled towers wherein the wall segments partially overlap.
*Neighbouring to each other* is preferably used to indicate two segments being disposed/arranged adjacent to each other. Within this definition is considered the situation where two wall segments partially overlap or abut each other along a rim or is spaced apart each other, and it is noted that two wall sections do not need to overlap to be neighbouring. Neighbouring is preferably also considered to cover a situation where two wall segments are spaced apart although preferably in mechanical connection with each other.
*Horizontal* and *vertical.* Vertical preferably refers to the longitudinal direction of the tower, that is preferably parallel to the direction of gravity, or parallel to the longitudinal direction of the tower. Horizontal is preferably considered to be perpendicular to vertical.

In another aspect - or in some preferred embodiments, the invention relates to a tower preferably for a wind turbine, the tower comprising a number of horizontally disposed tubular tower elements each comprising
- one or more first wall segments composed of one or more flat panels;
- one or more second wall segments composed of one or more flat panels.

According to the invention each of the first wall segments may be made from a rectangular and flat plate and each of the second wall segments may be made from a trapezoid-shaped and flat plate.

In some preferred embodiments,
- the first wall segments may preferably be equally shaped, such as having the same height and width, and may preferably be arranged in vertically extending rows, and
- the second wall segments each has a top-line and a base-line and the second wall segments may preferably be arranged in vertically extending rows, neighbouring vertically extending rows of first wall segments; wherein the length of a top-line of a second wall segment preferably may be substantially of same length as base-line of a neighbouring second wall segment in a row of second wall segments.

In some preferred embodiments, the first wall segment(s) may each comprises at least one bend and the second wall segment(s) optionally, such as preferably comprising at least one bend preferably along the vertical direction of the wall segment and defining two neighbouring flat panels, the bend being provided in a distance from a vertically extending edge of the wall segment so as to provide the wall segment a concave shape;

In some preferred embodiments, the first wall segments and/or the second wall segments in a tower element may each comprise
- a single bend, preferably being disposed with equidistant distance to the longitudinal edges of the wall segment,
- two bends, preferably being disposed with the distance in-between the two bends being equidistant to the distance from a bend to a neighbouring longitudinal edge, and/or
- more than two bends, preferably being disposed with an equidistant distance in-between the bends.

In some preferred embodiments, one or more the first wall segments in a tower element may preferably each comprise
- a single bend, preferably being disposed with equidistant distance to the longitudinal edges of the wall segment,
- two bends, preferably being disposed with the distance in-between the two bends being equidistant to the distance from a bend to a neighbouring longitudinal edge, and/or
- more than two bends, preferably being disposed with an equidistant distance in-between the bends.

In some preferred embodiments, one or more of the second wall segments in a tower element may preferably have a triangular projected shape.

In some preferred embodiment, the second wall segment having a triangular projected shape may preferably comprise a single bend preferably extending from the apex of the wall segment to a mid-point of a lower horizontal edge of the segment.

In some preferred embodiments, one or more of the of the second wall segments in a tower element may preferably have a parallelogramic projected shape.

In some preferred embodiments, one or more of the second wall segment may preferably have a parallelgramic projected shape preferably comprising
- a single bend, preferably being disposed so at to provide neighbouring panels a trapezoid shape.

In some preferred embodiments, one or more of the second wall segments in a tower element may have trapezoid projected shape.

In some preferred embodiments, one or more of the second wall segments may have a trapezoid projected shape preferably comprising
- a single bend, preferably being disposed with equidistant distance to the longitudinal edges of the wall segment,
- two bends, preferably being disposed with the distance in-between the two bends being equidistant to the distance from a bend to a neighbouring longitudinal edge, and/or
- more than two bends, preferably being disposed with an equidistant distance in-between the bends.

In some preferred embodiments, two neighbouring wall segments partially overlap along vertical edges and/or horizontal edges and being attached to each other by bolts, rivets or the like extending through the overlap and/or by welding.

In some preferred embodiments, the first and the second wall segments may preferably comprise flanges along the vertical edge, the horizontal edges or both. The flanges preferably points inwardly with respect to the concave shape of the wall segments and flanges of two neighbouring wall segments may preferably abut each other and being attached to each other by bolts, rivets or the like preferably extending through the flanges and/or by welding.

In some preferred embodiments, the first wall segments and the second wall segments, and the numbers thereof, may preferably be selected so as to define a tubular tower element(s) having a perimeter describing a polygon, preferably with an un-even number of sides.

In some preferred embodiments, the tower may preferably comprise a plurality of first wall segments disposed/arranged above each other with their vertical edges extending along a substantial straight line so as to form a section extending in a vertical direction of the tower and having a substantial rectangular projected shape.

In some preferred embodiments, the tower may preferably further comprise anchoring means preferably arranged at the vertical edges of the rectangular section.

In some preferred embodiments, the tower may preferably further comprise a crane preferably attached to the anchoring means.

In some preferred embodiments, the anchoring means may comprise two rails preferably extending vertically along the vertical edges of the rectangular section and preferably in parallel to each other and wherein the crane (if provided) preferably engages the rails in a vertical moveable manner.

In some preferred embodiments, the tower may preferably further comprise a tractor device configured for moving the crane along the rails.

According to the invention each of the first wall segments and each of the second wall segments may preferably be made from made from metal, steel, alumina or combinations thereof.

In further embodiments, the wall segments may preferably be produced so as to be transported without requirements as to pilot car escort.

*Arranged* and *disposed* are often used interchangeably herein.

An advantage of the invention is that by using wall segments having different projected shape, less amounts of scrap metal is produced. Further, due to the geometrical shape of the first and second wall segments used, the tower may be provided with polygonal cross sections, e.g. with an un-even number of sides, thereby providing a strength of a turbine tower being at least comparable to a tower with circular cross sections.

An advantage of the invention is its ability to provide a section extending in a vertical direction of the tower and having a substantial rectangular projected shape. Such a section makes it very easy to arranged a hoisting device such as a crane or the like on the tower thereby ease the set-up of a tower.

By using bolt assembly, larger segments with less thickness can be applied.

Further, due to the shaping of the wall segments, internal platforms can be shaped equal to each other.

Different aspects and embodiments of the present invention may each be combined with each other. These and other aspects of the invention will be apparent from and elucidated with reference to the embodiments described hereinafter as well as in the patent claims

### BRIEF DESCRIPTION OF THE FIGURES

The present invention and in particular preferred embodiments thereof will now be disclosed in more detail with reference to the accompanying figures. The figures show ways of implementing the present invention and are not to be construed as being limiting to other possible embodiments falling within the scope of the attached claim set.
Figure 1 illustrates schematically a tower according to a preferred embodiment;
Figure 2 illustrates schematically a first wall segment having a rectangular projected shape;
Figure 3 illustrates schematically a second wall segment having a parallelogramic projected shape;
Figure 4 illustrates schematically a second wall segment having a triangular projected shape;
Figure 5a illustrates schematically a layout of wall segments in a sheet of metal;
Figure 5b illustrates schematically a second wall segment formed by applying a bend to one of the trapeze-shaped wall segments illustrated in fig. 5a;
Figure 5c illustrates schematically how first and second wall segments are combined into a tower;
Figure 6 illustrates schematically a first assembly method for assembly of wall segments according to the invention;
Figure 7 illustrates schematically a second assembly method for assembly of wall segments according to the invention;
Figure 8 illustrates schematically wind turbine tower according to a preferred embodiment of the invention wherein the tower comprising a crane;
Figure 9 illustrates schematically anchoring means/rails arranged in a tower according to a preferred embodiment of the present invention;
Figure 10 illustrates schematically a re-enforcement segment according to a preferred embodiment of the invention;
Figure 11 illustrates schematically a cross section of a tower according to a preferred embodiment of the invention, and
Figure 12 illustrates schematically a top tower element according to a preferred embodiment of the invention.

### DETAILED DESCRIPTION OF AN EMBODIMENT

Nomenclature used in the figures are used identically in different figures to illustrate an identical or similar feature.

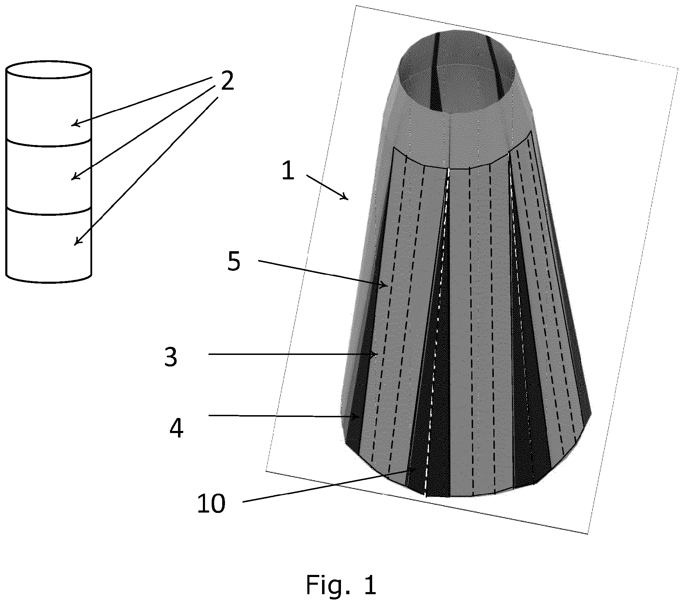

Reference is made to fig. 1 schematically illustrating a tower 1 preferably for a wind turbine. The smaller illustration in upper left corner of fig. 1 illustrates schematically a tower 1 with three horizontally disposed tower elements 2, thus a tower according to the present invention is disclosed as comprising a number of horizontally disposed tubular tower elements 2. The illustration to the right in fig. 1 illustrates schematically wall segments 3, 10 - please note that in the right hand side illustration, horizontal edges in between tower elements 2 are not indicated.

According to preferred embodiments of the invention, one or more such as all of the tubular tower elements each comprises:
- one or more first wall segments 3 composed of flat panels 6, where each of the first wall segment 3 has a substantial rectangular projected shape with a vertical v and a horizontal h direction, and
- one or more second wall segments 10 composed of flat panels 6, where each second wall segment has a substantial non-rectangular projected shape with a vertical v and horizontal h direction.

A tower element 2 disclosed in fig. 1, is composes of first wall segments 3 having a rectangular projected shape and second wall segments 10 having a trapezoid projected shape - due to the perspective used in fig. 1, the upper most illustrated second wall segments 10 may appear as having triangular projected shape, but the upper part of these wall segment is not apex-formed but appears so in the figure due to an overlap between the segments 3, 10 (confer also the interior view in fig 1 at the upper end of the tower 1). As illustrated in fig. 1, the first wall segments 3 comprising two bends 5 extending in the vertical direction of the tower 1 and the second wall segments 10 has a single bend extending in the vertical direction of tower 1.

The wall segments disclosed herein are preferably made from metal, steel, alumina or combinations thereof.

The amount of degrees of bend is defined by the number of wall segments (first and second segments 3, 10) used together with a desired diameter on an inscribed circle in a given cross section of the tower so as to define a closed perimeter in a tubular tower element.

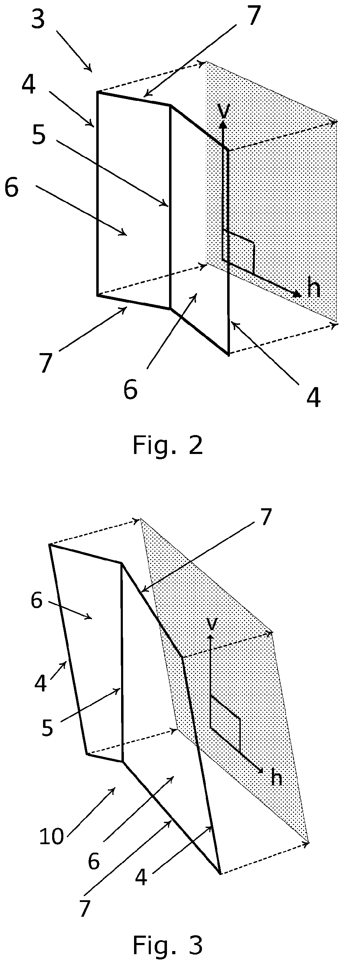

Reference is made to fig. 2 schematically illustrating a first wall 3 segment having a rectangular projected shape. In fig. 2, the projected shape is shown behind the wall segment 3 as a shaded area. Fig. 2 also indicates the horizontal direction *h* as well as the vertical direction v. Although the directions are shown in the projected area, the directions in general applies to the wall segments.

As apparent from fig. 2, a first wall segment 3 may be made from a rectangular and flat plate which has been provided a single bend 5 preferably aligned with the vertical egdes 4 of the element, thereby forming the rectangular and flat plate into a 3-dimensional segment.

Reference is made to fig. 3 schematically illustrating a second wall segment 10 having a parallelogramic projected shape. Again, the projected shape is shown behind wall segment as a shade area and the directions *v, h* are also shown in the shaded area. As apparent from fig. 3, the second wall segment 10 may be made from a parallelogramic and flat plate which has been provided a single bend 5 thereby forming the parallogramic and flat plate into a 3-dimensional segment.

As illustrated in fig. 2 and 3, the first and the second wall segments 3, 10 according to preferred embodiments each comprising at least one bend 5 (in figures 2 and 3, the wall segments only has a single bend (5)) along the vertical direction of the wall segment 3, 10. However, in other preferred embodiments the second element 10 does not comprise any bend 5. The bend 5 defines two neighbouring flat panels 6 in the sense that the bend divides the originally flat plate, from which the wall segments disclosed herein are made, into two flat sections (termed panels herein) abutting each other along the bend (if more than one bend 5 is applied, the number of panels will be more than two).

It is noted that the material from which the wall segments are produced typically is produced as a flat plate being coiled into a roll; however, due the weight of the plate, the plate forms a flat plate upon uncoiling when supported on a flat surface. As also illustrated in the fig. 2 and 3, the bends 5 is provided in a distance from a vertically extending edge 4 of the wall segment 3, 10 so as to provide the wall segment (3, 10) a concave shape. The wall segments 3, 10 are disposed/arranged in a tower element 2 so that the concavity points inwardly to define the tubular shape.

Thus, in a tower element according to preferred embodiments of the invention, first wall segments 3 and second wall segments 10 are arranged neighbouring to each (as illustrated e.g. in fig. 1) along their longitudinal edges 4 so as to form a tubular structure.

It is noted - and elucidated below - that while the first wall 3 segments all have a rectangular shape projected shape, the second wall segments 10 may have different projected shapes. The size of the first wall segments 3 used in a single tower element 2 may be preferred to have the same dimensions (v, h) whereas the dimension of the second wall segments 10 may vary in a tower element 2. However, the upper and lower perimeter of a tower element 2 is generally preferred to be horizontal.

In a preferred embodiment, one or more such as all of the first wall segments 3 in a tower element 2 comprising a single bend 5, preferably being disposed with equidistant distance to the longitudinal edges 4 of the wall segment 3 - this is disclosed in fig. 2.

In other preferred embodiments, one or more such as all of the first wall segments 3 in a tower element 2 comprising two bends 5, preferably being disposed with the distance in-between the two bends 5 being equidistant to the distance from a bend to a neighbouring longitudinal edge 4 - this is disclosed in fig. 1 for the first wall segment 3.

However, the bend(s) 5 may be arranged in different distances from the edge 4, such as, when two bends 5 are applied, that the distance from the edge 4 to a bend 5 is half the distance between the two bends 5.

In further preferred embodiments one or more such as all of the first wall segments 3 in a tower element 2 comprising more than two bends 5, preferably being disposed with an equidistant distance in-between the bends 5.

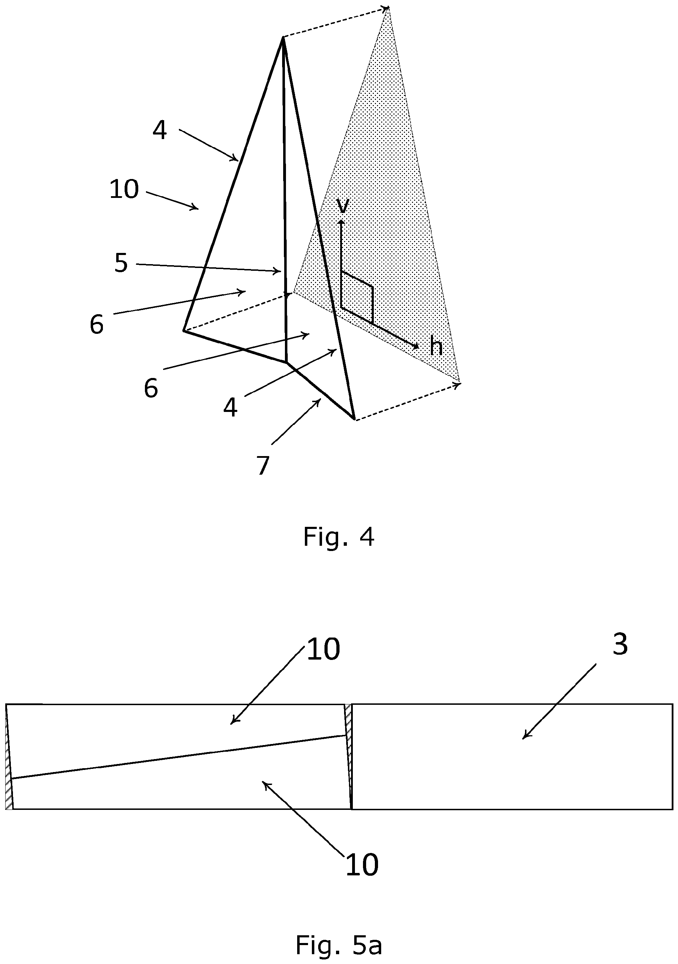

Reference is made to fig. 4 schematically illustrating a second wall segment 10 having a triangular projected shaped. Again the projected shape is illustrated by a shaded area. Thus, a tower element 2 according to the present invention may comprise one or more, such as all, second wall segments 2 having a triangular projected shape. As apparent from fig. 4, the second wall segment 10 may be made from a triangular and flat plate which has been provided a single bend 5 thereby forming the triangular and flat plate into a 3-dimensional segment.

The wall segment illustrated in fig. 4 illustrates a preferred bending of the wall segment 10. As illustrated, the second wall segment 10 has a triangular projected shape and may comprise a single bend 5 extending from the apex of the wall segment 10 to a mid-point of a lower horizontal edge of the segment 10. Thereby the two panels 6 are flat triangular panels sharing a common side coinciding with the bend 5.

In a further embodiment, a tower according to according to the present invention comprising one or more, such as all, of the of the second wall segments 10 in a tower element 2 having a parallelogramic projected shape as illustrated in fig. 3. The second wall segment 10 having a parallelogramic projected shape may preferably comprise a bend 5 such as a single bend 5, preferably being disposed so at to provide neighbouring panels (6) a trapezoid shape (as also illustrated in fig. 3). Wall segments 10 parallelogramic projected shape may comprise more than one bend 5, such as two or three and they may be disposed as disclosed e.g. in connection with the wall segment in fig. 2.

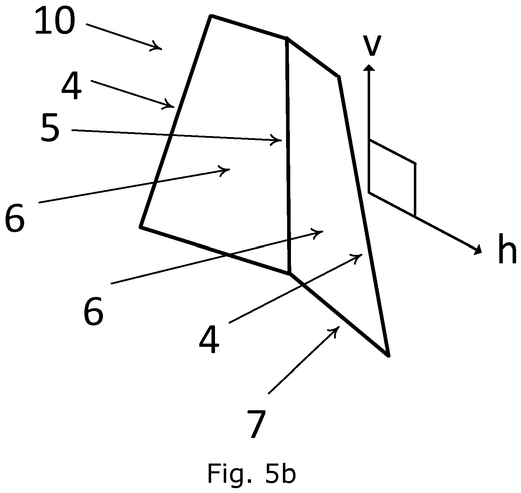

Further, one or more, such as all, of the second wall segments 10 in a tower element 2 may have a trapezoid projected shape (see fig. 5b). Each of such trapezoid projected shaped wall segments 10 may be provided with one or more bends extending in vertical direction, where the second wall segment is made from trapezoid shaped flat plate to which the bend(s) is(are) provided.

Preferably one or more, such as all, of the second wall segments 10 having a trapezoid projected shape and comprising
- a single bend 5, preferably being disposed with equidistant distance to the longitudinal edges 4 of the wall segment 3,
- two bends 5, preferably being disposed with the distance in-between the two bends 5 being equidistant to the distance from a bend to a neighbouring longitudinal edge 4, and/or
- more than two bends 5, preferably being disposed with an equidistant distance in-between the bends 5.

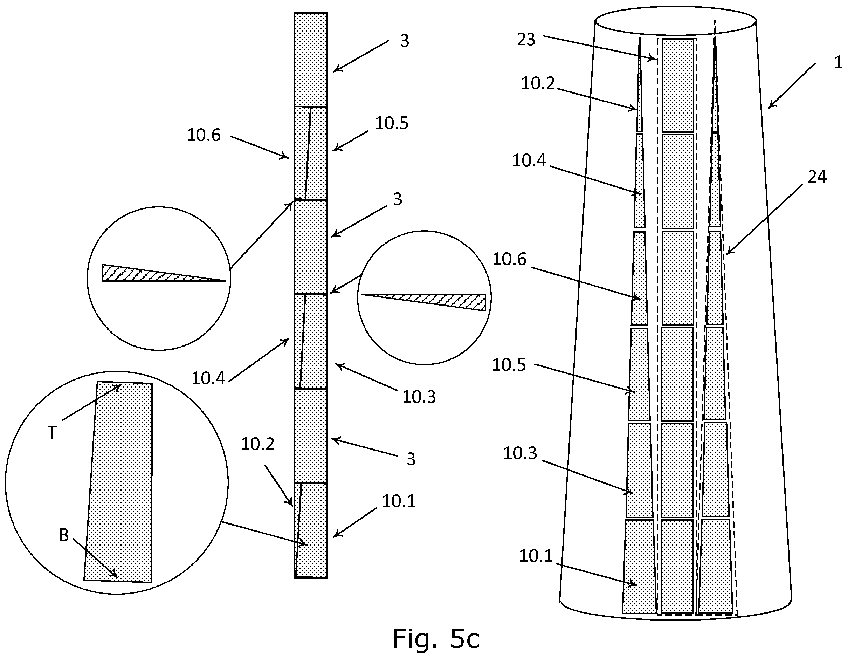

Reference is made to fig. 5a which schematically illustrates a layout of wall segments 3, 10 in a sheet of metal. The sheet of metal is rolled off a roll of metal (not shown) and it is seen from the fig. 5a that most of the material can be used with only small amounts of scrap metal (illustrated by cross hatching - triangular shaped elements) being produced. In fig. 5a, both second wall segments 10 are shown as being identical to each other. However, as will be described in connection with fig. 5c, the second wall segment 10 may typically not be identical to each other.

Reference is made to fig. 5b schematically illustrating a second wall segment 10 having a trapezoid-shaped projected shaped formed by one of the trapezoid-shaped flat plate 10 shown in fig. 5a. (please note that the projected shape is no shown the fig. 5b) As apparent from fig. 5b, the second wall segment 10 may be made from a trapezoid-shaped and flat plate which has been provided a single bend 5 thereby forming the trapezoid-shaped and flat plate into a 3-dimensional segment.

Reference is made to fig. 5c schematically illustrating how wall segments 3, 10 are combined into a tower1. Please note that in fig. 5c, bends are not shown as bends may not be needed or preferred. However, if bends are used e.g. in order to increase the buckling stability of the tower, such bends may be applied to one or more such as all segments as otherwise disclosed herein. Further, items appearing in circles are magnified views On the left hand side of fig. 5c, the first and second wall segments 3, 10 are illustrated on a flat plate from which they are produced (e.g. as disclosed in connection with fig. 5a). Please observe that the labelling of the second wall segment are 10.1...10.6 and that the same labelling has been used in the right hand side of fig. 5c. In left hand side of fig. 5c, six second wall segments are illustrated corresponding to the six labelled second wall segments illustrated on the tower 1 in the right hand side of fig. 5c. Only three first wall segments 3 are illustrated although six is shown in the right hand side of fig. 5c since left hand side of fig. 5c is only to illustrate the principle of a layout of wall segments in a longitudinal extending flat metal plate. Please also observe that the second wall segment 10.2 although appearing triangular shaped, is trapezoid-shaped, although the top-line T is relatively short, whereby it vanishes in the drawing. The first wall segments 3 are all rectangular and the second wall segments 10 are all trapezoid-shaped when provided from the sheet metal.

As illustrated in fig. 5c left hand side, the second wall segments 10 are arranged pair-wise and side by side in the sheet metal, where the top-line T of one of the wall segment is arranged at the base-line B of a neighbouring second wall segment, so that the top-line T of one wall segment and the base-line B of a neighbouring wall segment are on the same trajectory (defined by one of the top-line T or base-line B). Thus, as shown in fig. 5c, one of the two neighbouring wall segments 10 is "rotated" relatively to it position in the tower 1 (see fig. 5c right hand side).

The cross-hatched triangles shown in circles in fig. 5c are scrap metal, that is areas that are cut-away in order to provide the wall segments from the sheet metal.

In fig. 5c, right hand side, the tower 1 is illustrated as a cone and the wall segments are shown on top of the cone in an exploded view, that is when the tower is assembled from the wall segments 10, 3 the space shown in between the wall segments will not be present since neighbouring wall segments 3, 10 are assembled along their edges as otherwise disclosed herein.

As apparent from fig. 5c, as the tower is made from first wall segments 3 having a rectangular shape, optionally provided with one or more longitudinal bends, and second wall segments 10, optionally provided with one or more longitudinal bends, very little waste material (scrap metal) is produced. Further, the wall segments 3, 10 can be produced from a roll of metal of ordinary width.. Thus, all-in-all a very cost effective tower can be produced. These advantages also holds for many other embodiments of the invention.

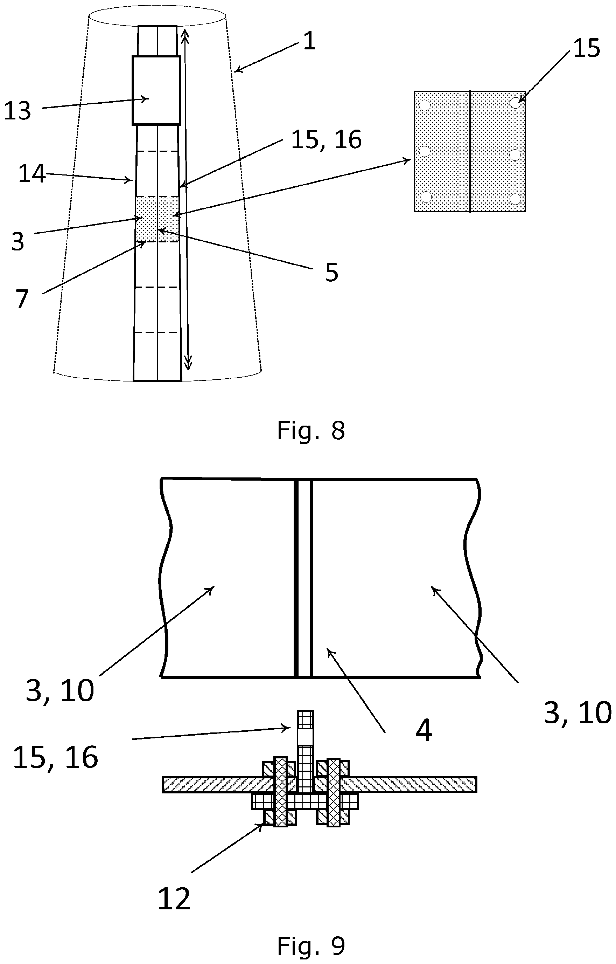

As also illustrated in fig. 5c, right hand side the first wall segments 3 are equally shaped and arranged in vertically extending rows 23 - see rectangle circumscribing the first wall segments (shown with dashed line). As will become apparent with reference to fig. 8, the vertically extending row 23 of first wall segments 3, may form a rectangular section 14 usefull in relation to e.g a crane 13.

As presented above, the second wall segments 10.1...10.6 each has a top-line T and a base-line B, and the second wall segments 10 are arranged in vertically extending rows 24, neighbouring the vertically extending rows of first wall segments 3 - see triangle circumscribing the second wall segments which is illustrated with dashed line. In each of the vertically extending rows of second wall segments, the second wall segments 10 are shaped so that the length of a top-line T of a second wall segment e.g. 10.1 is substantially of same length as base-line B of a neighbouring second wall segment e.g. 10.3. It is noted that the vertically extending row of second wall segment may be viewed as forming a triangle.

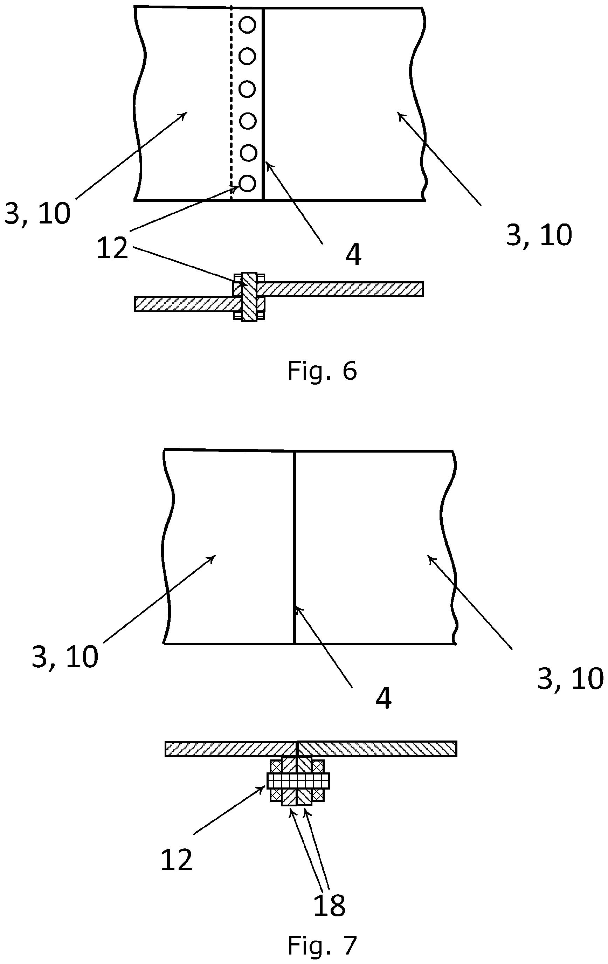

Assembly of a tower element 2 from wall segments according to the present invention is schematically illustrated in fig. 6 and 7. In fig. 6 and 7 the upper parts of these figures are side view and the lower parts of these figures are horizontal cross sectional views through the assembly.

As schematically illustrated in fig. 6, an assembly of two neighbouring wall segments 3, 10 is made by the two neighbouring wall segments 3, 10 partially overlap along vertical edges 4 and being attached to each other by bolts, such as tension control bolts, rivets or the like 12 extending through the overlap. Instead or in combination herewith, welding, gluing, etching or stir welding can be applied.

In an alternative assembly (see fig. 7) according to the invention, the first and the second wall segments 3, 10 each comprising flanges 18 along the vertical edges 4, the horizontal edges 7 or both. Such flanges 18 preferably points inwardly with respect to the concave shape of the wall segments 3, 10 and flanges 18 of two neighbouring wall segments abuts each other and being attached to each other by bolts, such as tension controlled bolts, rivets or the like 12 extending through the flanges 18 and/or by welding, gluing, etching or stir welding.

Similar or even identical assembly may be used to assemble along horizontal edges.

If a welding technique and in particular if stir welding is used, no overlap between the elements is needed.

Further, the wall segments may be arranged edge-against-edge (not illustrated) and a fish plate and/or by welding, gluing, etching or stir welding may be used to assemble the wall segments in such configurations.

It is noted that the assembly disclosed in connection with fig. 6 and 7 is disclosed with focus on assembling along vertical edges but the assembly method disclosed may also be applied to assembly along horizontal edges, so as to assembly tower elements 2 to each other.

In specific preferred embodiments, the first wall segments 3 and the second wall segments 10, and the numbers thereof, are selected so as to define a tubular tower element(s) 2 (or a tower 1) having a perimeter describing a polygon, preferably with an un-even number of sides. By having a perimeter describing a polygon is preferably meant that one or more, such as all horizontal cross sectional views of a tower element (or tower 1) has polygonal shaped perimeter.

In a further particular preferred embodiment of a tower preferably being wind turbine tower according to present invention, the tower comprising as disclosed in fig. 8 a section 14 having rectangular projected shape. This is preferably provided by the tower 1 comprising a plurality of first wall segments 3 disposed/arranged above each other with their vertical edges 4 extending along a substantial straight line so as to form a section 14 extending in a vertical direction of the tower 1 and having a substantial rectangular projected shape. It is noted that although the section 14 is shown as extending from bottom to top of the tower, the section 14 may in some embodiment extend only though a part of the longitudinal extension of the tower 1.

Even if the plurality of first wall segment 2 disposed/arranged above each other with there vertical edges 4 extending along a substantial straight line but forming a section 14 having other shapes than rectangular, such as a trapezoid projected shape, the angle of the bends 5 will be the same amount along the section.

In fig. 8, one of the first wall segments 3 is illustrated as shaded area and a horizontal edge 7 illustrated by broken lines. The dotted lines are used to indicate a tower 1.

As the section 14 extend along vertical straight lines, the thereby defined geometry is highly useful for fastening different items to the tower.

Thus, in a preferred embodiment, the tower further comprising anchoring means 15 arranged at the vertical edges of the rectangular section 14 . This may be in the form of through going opening in the wall segments - see close-up detail in fig. 8. In case of wall segments overlapping each other, the openings 15 may be provided in the overlap region. In preferred embodiments, the opening may be reenforced and/or providing with a treatment to avoid e.g. corrosion. In preferred embodiments, the vertical distance between the anchoring means/opening is the same throughout the vertical extension of the section 14. As the openings 15 may be accessible from the inside of the tower, elements such as crane elements may easily be attached to the tower 1 from the inside by e.g. bolts.

Fig. 9 illustrates schematically a preferred embodiment of anchoring means 15, which also may be used as rails, arranged in a tower according to the present invention. It is illustrated that the anchoring means 15 comprising a protrusion extending outwardly from the tower and having an opening provided in the outwardly protruding part, which opening can be used for anchoring elements to the tower 1.

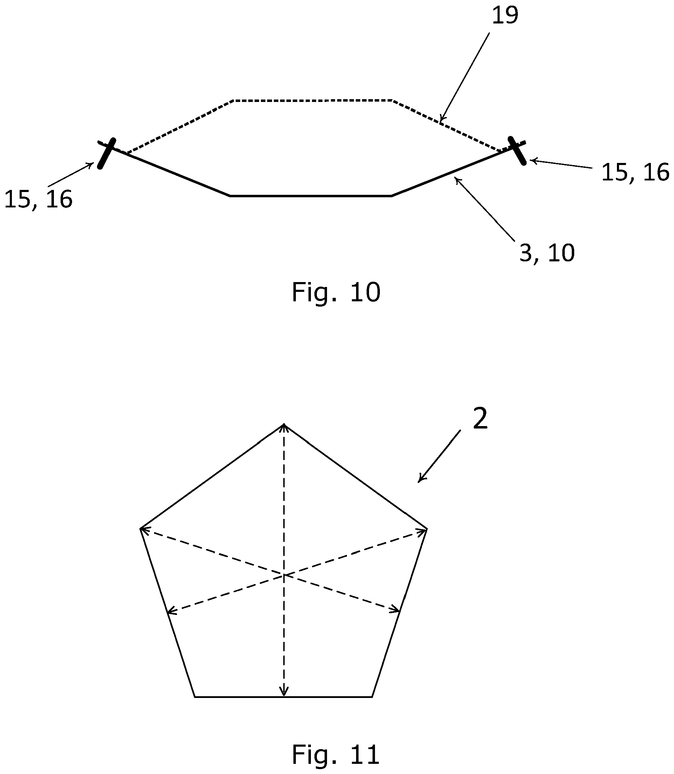

Fig. 10 illustrates schematically a re-enforcement segment 19 (illustrated by a broken line for illustrative purpose only) according to a preferred embodiment of the invention. Fig. 10 is a horizontal cross-sectional view through a tower element 2 where only one of wall segments 3, 10 is illustrated. As illustrated, the re-enforcement segment 19 is applied to the inner side of the tower 1. The height (vertical direction) of the re-enforcement segment 19 may be less than the height of the wall segment 3, 10. As also illustrated in fig. 10, anchoring means 15 / rails 16 may be applied in the illustrated position. The re-enforcement segment 19 may at least limit the risk of local buckling in the tower due to a force applied to the anchoring means 15 / rails 16.

A general problem with towers e.g. for a wind turbine is that it requires a crane to set-up the tower and/or to hoist wings and nacelle to the upper part of the tower, and these problems can be solved in an effective manner by the present invention by the tower further comprising a crane 13 attached to the anchoring means 15 (see fig. 8). This can be utilised in combination with the tower being comprised of tower elements arranged "on-top" of each other by the crane 13 repeatedly places a one or more tower element 2 or wall segment 3, 10 and anchoring means 15, where after the crane 13 can be moved upwardly and engage with the newly arranged or provided anchoring means 15. The movement of the crane 13 can be accomplished by telescopic gripping means engaging the anchoring means 15 and being adapted to hoist the crane upwardly or lower the crane 13 downwardly.

In a preferred embodiments, the anchoring means 15 comprising two rails 16 (see e.g. fig. 9 - protruding part which may act as a rails) extending vertically along the vertical edges of the rectangular section 14 and preferably in parallel to each other and wherein said crane 13 engages the rails in a vertical moveable manner.

Movement of the crane 13 upwardly and downwardly is preferably provided a tractor device 17 configured for moving the crane along the rails 16. Such as tractor device 17 may comprise a meshed connection such as between the rails 16 and motor arranged on the crane 13.

In fig. 11 a cross sectional view of a tower according to preferred embodiments of the invention is schematically illustrated according to which, the cross section of the tower (or tower element) has a perimeter describing a polygon, preferably with an un-even number of sides - in fig. 11, the number of sides is five as an example only. As it is indicated in fig. 11, the distance from a corner to the middle of an opposite side is the same through out the polygon. This has the benefit that the strength is substantially equal as seen from all sides.

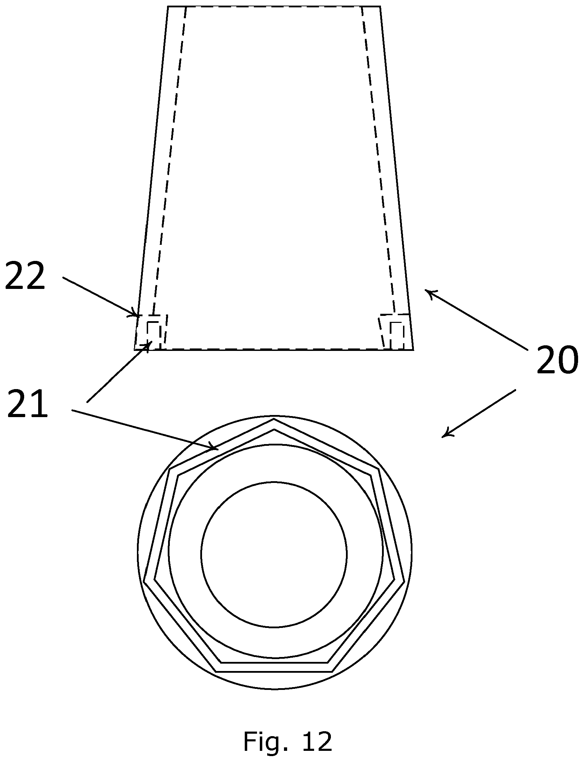

Reference is made to fig. 12 illustrating schematically a tower top segment 20 according to the present invention. In fig. 12 the upper part is a side view and the lower part is a bottom view. Dotted lines in the upper part is used to indicate the interior of the tower top segment 20. The tower top segment 20 is shaped as a truncated cone and has at its lower end a groove 21. The groove 21 is configured for mating with the a tower segment 2 having a horizontal polygonal cross section (along its upper edge) such that an upper end of a tower segment 2 is received in the groove 21. The groove can be machined in a lower section 22 typically being an annular element of the tower top segment 20. Without limiting the scope of the invention, the dimension of the tower top segment 20 may preferably be kept within height smaller than 15 metres and an outer most diameter smaller than 3.6 metres.

Without limiting the scope of the invention, the first and the second wall segments may preferably be produced with dimensions where the length may be shorter than 16.6 such as shorter than 14.6 metres and the width may be shorter and 3.6 metres.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference symbols used

- 1: tower
- 2: tower element
- 3: first wall segment
- 4: vertical edge
- 5: Bend
- 6: Panel
- 7: horizontal edge
- 10: second wall segment
- 11: panel
- 12: bolt, rivet or the like
- 13: crane
- 14: rectangular section
- 15: anchoring means
- 16: rails
- 17: tractor device
- 18: flange
- 19: re-enforcement segment
- 20: tower top element
- 21: groove
- 22: annular element

- 23: vertically extending row of first wall segments
- 24: vertically extending row of second wall segment
- B: Baseline
- T: Topline

## Claims

1. A tower (1) for a wind turbine, the tower comprising a number of horizontally disposed tubular tower elements (2) each comprising
- one or more first wall segments (3) composed of one or more flat panels (6), each first wall segment (3) has a substantial rectangular projected shape with a vertical (v) and a horizontal (h) direction;
- one or more second wall segments (10) composed of one or more flat panels (6), each second wall segment has a substantial non-rectangular projected shape with a vertical (v) and horizontal (h) direction;
wherein
- first wall segments and second wall segments (3, 10) are arranged neighbouring to each to each along their longitudinal edges (4) so as to form a tubular structure,
- each of the first wall segments (3) is made from a rectangular and flat plate and each of the second wall segments (10) is made from a trapezoid-shaped and flat plate,
- the first wall segment(s) (3) comprising at least one bend (5) and the second wall segment(s) (10) comprising one bend (5) along the vertical direction of the wall segment (3, 10) and defining two neighbouring flat panels (6), the bend (5) being provided in a distance from a vertically extending edge (4) of the wall segment (3, 10) so as to provide the wall segment (3, 10) a concave shape, and
- each of the first wall segments (3) and each of the second wall segments (10) is made from made from metal, steel, alumina or combinations thereof.

2. A tower according to claim 1, wherein
- the first wall segments (3) are equally shaped and arranged in vertically extending rows (23), and
- the second wall segments (10.1...10.6) each has a top-line (T) and a base-line (B) and the second wall segments are arranged in vertically extending rows (24), neighbouring vertically extending rows of first wall segments; wherein the length of a top-line (T) of a second wall segment (10.1) is substantially of same length as base-line (B) of a neighbouring second wall segment (10.3) in a row (24) of second wall segments (10.1...10.6).

3. A tower according to claim 1, wherein the first wall segments (3) and/or the second wall segments (10) in a tower element (2) each comprising
- a single bend (5), preferably being disposed with equidistant distance to the longitudinal edges (4) of the wall segment (3),
- two bends (5), preferably being disposed with the distance in-between the two bends (5) being equidistant to the distance from a bend to a neighbouring longitudinal edge (4), and/or
- more than two bends (5), preferably being disposed with an equidistant distance in-between the bends (5).

4. A tower according to any of the preceding claims, wherein one or more the first wall segments (3) in a tower element (2) comprising
- a single bend (5), preferably being disposed with equidistant distance to the longitudinal edges (4) of the wall segment (3),
- two bends (5), preferably being disposed with the distance in-between the two bends (5) being equidistant to the distance from a bend to a neighbouring longitudinal edge (4), and/or
- more than two bends (5), preferably being disposed with an equidistant distance in-between the bends (5).

5. A tower according to claim 1 or 3, wherein one or more of the second wall segments (10) in a tower element (2) has a triangular projected shape.

6. A tower according to claim 5, wherein the second wall segment (10) having a triangular projected shape comprising a single bend (5) extending from the apex of the wall segment (10) to a mid-point of a lower horizontal edge of the segment (10).

7. A tower according to any of claims 1 or 4-6, wherein one or more of the of the second wall segments (10) in a tower element (2) has a parallelogramic projected shape.

8. A tower according to claim 7, wherein one or more of the second wall segment (10) having a parallelgramic projected shape comprising
- a single bend (5), preferably being disposed so at to provide neighbouring panels (6) a trapezoid shape.

9. A tower according to any of the claims 1 or 4-6, wherein one or more of the second wall segments (10) in a tower element (2) has a trapezoid projected shape.

10. A tower according to claim 9, wherein one or more of the second wall segments (10) having a trapezoid projected shape comprising
- a single bend (5), preferably being disposed with equidistant distance to the longitudinal edges (4) of the wall segment (3),
- two bends (5), preferably being disposed with the distance in-between the two bends (5) being equidistant to the distance from a bend to a neighbouring longitudinal edge (4), and/or
- more than two bends (5), preferably being disposed with an equidistant distance in-between the bends (5).

11. A tower according to any of the preceding claims, wherein two neighbouring wall segments (3, 10) partially overlap along vertical edges (4) and/or horizontal edges and being attached to each other by bolts, rivets or the like (12) extending through the overlap and/or by welding.

12. A tower according to any of the preceding claims, wherein the first and the second wall segments (3, 10) comprising flanges (18) along the vertical edges (4), the horizontal edges (7) or both, said flanges (18) points inwardly with respect to the concave shape of the wall segments (3, 10) and flanges (18) of two neighbouring wall segments abuts each other and being attached to each other by bolts, rivets or the like (12) extending through the flanges (18) and/or by welding.

13. A tower according to any of the preceding claims, wherein the first wall segments (3) and the second wall segments (10), and the numbers thereof, are selected so as to define a tubular tower element(s) (2) having a perimeter describing a polygon, preferably with an un-even number of sides.

14. A wind turbine tower according to any of the proceed claims, wherein
- the tower comprising a plurality of first wall segments (3) disposed/arranged above each other with their vertical edges (4) extending along a substantial straight line so as to form a section (14) extending in a vertical direction of the tower and having a substantial rectangular projected shape.

15. A tower according to claim 14, wherein the tower further comprising anchoring means (15) arranged at the vertical edges of the rectangular section (14).

16. A tower according to claim 15, the tower further comprising a crane (13) attached to the anchoring means (15).

17. A tower according to claim 14 or 15, wherein the anchoring means (15) comprising two rails (16) extending vertically along the vertical edges of the rectangular section (14) and in parallel to each other and wherein said crane (13) engages the rails in a vertical moveable manner.

18. A tower according to claim 17, further comprising a tractor device (17) configured for moving the crane along the rails (16).

## Patentansprüche

1. Turm (1) für eine Windturbine, wobei der Turm eine Anzahl von horizontal angeordneten röhrenförmigen Turmelementen (2) umfasst, die jeweils Folgendes umfassen:
- ein oder mehrere erste Wandsegmente (3), die aus einer oder mehreren flachen Tafeln (6) bestehen, wobei jedes erste Wandsegment (3) eine im Wesentlichen rechteckig projizierte Form mit einer vertikalen (v) und einer horizontalen (h) Richtung aufweist;
- ein oder mehrere zweite Wandsegmente (10), die aus einer oder mehreren flachen Tafeln (6) bestehen, wobei jedes zweite Wandsegment eine im Wesentlichen nichtrechteckig projizierte Form mit einer vertikalen (v) und einer horizontalen (h) Richtung aufweist;
wobei
- die ersten Wandsegmente und die zweiten Wandsegmente (3, 10) entlang ihrer Längskanten (4) benachbart zueinander angeordnet sind, um so eine röhrenförmige Struktur zu bilden,
- jedes der ersten Wandsegmente (3) aus einer rechteckigen und flachen Platte besteht und jedes der zweiten Wandsegmente (10) aus einer trapezförmigen und flachen Platte besteht,
- das erste/die ersten Wandsegment(e) (3) zumindest eine Biegung (5) und das zweite/die zweiten Wandsegment(e) (10) eine Biegung (5) entlang der vertikalen Richtung des Wandsegments (3, 10) umfasst/umfassen und zwei benachbarte flache Tafeln (6) definiert/definieren, wobei die Biegung (5) in einem Abstand von einer vertikal verlaufenden Kante (4) des Wandsegments (3, 10) bereitgestellt ist, um so dem Wandsegment (3, 10) eine konkave Form zu verleihen, und
- jedes von den ersten Wandsegmenten (3) und jedes von den zweiten Wandsegmenten (10) aus Metall, Stahl, Aluminiumoxid oder Kombinationen davon gefertigt ist.

2. Turm nach Anspruch 1, wobei
- die ersten Wandsegmente (3) gleichartig geformt und in vertikal verlaufenden Reihen (23) angeordnet sind, und
- die zweiten Wandsegmente (10.1...10.6) jeweils eine Oberlinie (T) und eine Basislinie (B) aufweisen und die zweiten Wandsegmente in vertikal verlaufenden Reihen (24) angeordnet sind, wobei sie zu vertikal verlaufenden Reihen der ersten Wandsegmente benachbart sind; wobei die Länge einer Oberlinie (T) eines zweiten Wandsegments (10.1) im Wesentlichen die gleiche Länge aufweist wie die Basislinie (B) eines benachbarten zweiten Wandsegments (10.3) in einer Reihe (24) von zweiten Wandsegmenten (10.1...10.6).

3. Turm nach Anspruch 1, wobei die ersten Wandsegmente (3) und/oder die zweiten Wandsegmente (10) in einem Turmelement (2) jeweils Folgendes umfassen:
- eine einzelne Biegung (5), die bevorzugt mit einen gleich weit entfernten Abstand zu den Längskanten (4) des Wandsegments (3) angeordnet ist,
- zwei Biegungen (5), die bevorzugt so angeordnet sind, dass der Abstand zwischen den zwei Biegungen (5) zu dem Abstand von einer Biegung zu einer benachbarten Längskante (4) gleich weit entfernt ist, und/oder
- mehr als zwei Biegungen (5), die bevorzugt mit einem gleich weit entfernten Abstand zwischen den Biegungen (5) angeordnet sind.

4. Turm nach einem der vorhergehenden Ansprüche, wobei eines oder mehrere der ersten Wandsegmente (3) in einem Turmelement (2) Folgendes umfassen:
- eine einzelne Biegung (5), die bevorzugt mit einen gleich weit entfernten Abstand zu den Längskanten (4) des Wandsegments (3) angeordnet ist,
- zwei Biegungen (5), die bevorzugt so angeordnet sind, dass der Abstand zwischen den zwei Biegungen (5) zu dem Abstand von einer Biegung zu einer benachbarten Längskante (4) gleich weit entfernt ist, und/oder
- mehr als zwei Biegungen (5), die bevorzugt mit einem gleich weit entfernten Abstand zwischen den Biegungen (5) angeordnet sind.

5. Turm nach Anspruch 1 oder 3, wobei eines oder mehrere der zweiten Wandsegmente (10) in einem Turmelement (2) eine dreieckig projizierte Form aufweisen.

6. Turm nach Anspruch 5, wobei das zweite Wandsegment (10) eine dreieckig projizierte Form aufweist, umfassend eine einzelne Biegung (5), die von der Spitze des Wandsegments (10) zu einem Mittelpunkt einer unteren horizontalen Kante des Segments (10) verläuft.

7. Turm nach einem der Ansprüche 1 oder 4-6, wobei eines oder mehrere der zweiten Wandsegmente (10) in einem Turmelement (2) eine parallelogrammförmig projizierte Form aufweisen.

8. Turm nach Anspruch 7, wobei eines oder mehrere der zweiten Wandsegmente (10) in eine parallelogrammförmig projizierte Form aufweisen, umfassend
- eine einzelnen Biegung (5), die bevorzugt so angeordnet ist, dass sie benachbarten Tafeln (6) eine Trapezform verleiht.

9. Turm nach einem der Ansprüche 1 oder 4-6, wobei eines oder mehrere der zweiten Wandsegmente (10) in einem Turmelement (2) eine trapezförmig projizierte Form aufweisen.

10. Turm nach Anspruch 9, wobei eines oder mehrere der zweiten Wandsegmente (10) eine trapezförmig projizierte Form aufweisen, umfassend
- eine einzelne Biegung (5), die bevorzugt mit einen gleich weit entfernten Abstand zu den Längskanten (4) des Wandsegments (3) angeordnet ist,
- zwei Biegungen (5), die bevorzugt so angeordnet sind, dass der Abstand zwischen den zwei Biegungen (5) zu dem Abstand von einer Biegung zu einer benachbarten Längskante (4) gleich weit entfernt ist, und/oder
- mehr als zwei Biegungen (5), die bevorzugt mit einem gleich weit entfernten Abstand zwischen den Biegungen (5) angeordnet sind.

11. Turm nach einem der vorhergehenden Ansprüche, wobei sich zwei benachbarte Wandsegmente (3, 10) entlang vertikaler Kanten (4) und/oder horizontaler Kanten teilweise überlappen und durch Schrauben, Nieten oder dergleichen (12), die durch die Überlappung verlaufen, und/oder durch Schweißen miteinander befestigt sind.

12. Turm nach einem der vorhergehenden Ansprüche, wobei die ersten und die zweiten Wandsegmente (3, 10) Flansche (18) entlang der vertikalen Kanten (4), der horizontalen Kanten (7) oder beiden umfassen, wobei die Flansche (18) in Bezug auf die konkave Form der Wandsegmente (3, 10) nach innen zeigen und die Flansche (18) von zwei benachbarten Wandsegmenten aneinander anstoßen und durch Schrauben, Nieten oder dergleichen (12), die durch die Flansche (18) verlaufen, und/oder durch Schweißen miteinander verbunden sind.

13. Turm nach einem der vorhergehenden Ansprüche, wobei die ersten Wandsegmente (3) und die zweiten Wandsegmente (10) und die Anzahl davon so ausgewählt sind, dass ein röhrenförmiges Turmelement/röhrenförmige Turmelemente (2) mit einem Umfang, der ein Vieleck bevorzugt mit einer ungeraden Anzahl von Seiten beschreibt, definiert wird.

14. Windturbinenturm nach einem der vorhergehenden Ansprüche, wobei
- der Turm eine Vielzahl von ersten Wandsegmenten (3), die übereinander angeordnet/platziert sind, umfasst, wobei deren vertikalen Kanten (4) entlang einer im Wesentlichen geraden Linie verlaufen, um so einen Abschnitt (14) zu bilden, der in einer vertikalen Richtung des Turms verläuft und eine im Wesentlichen rechteckige projizierte Form aufweist.

15. Turm nach Anspruch 14, wobei der Turm ferner ein Verankerungsmittel (15) umfasst, das an den vertikalen Kanten des rechteckigen Abschnitts (14) angeordnet ist.

16. Turm nach Anspruch 15, der Turm ferner umfassend einen Kran (13), der an dem Verankerungsmittel (15) befestigt ist.

17. Turm nach Anspruch 14 oder 15, wobei das Verankerungsmittel (15) zwei Schienen (16) umfasst, die vertikal entlang der vertikalen Kanten des rechteckigen Abschnitts (14) und parallel zueinander verlaufen, und wobei der Kran (13) auf eine vertikal bewegliche Weise in die Schienen eingreift.

18. Turm nach Anspruch 17, ferner umfassend eine Zugvorrichtung (17), die dazu konfiguriert ist, den Kran entlang der Schienen (16) zu bewegen.

## Revendications

1. Tour (1) pour une éolienne, la tour comprenant un certain nombre d'éléments de tour tubulaires disposés horizontalement (2) comprenant chacun
- un ou plusieurs premiers segments de paroi (3) composés d'un ou plusieurs panneaux plats (6), chaque premier segment de paroi (3) ayant une forme projetée sensiblement rectangulaire avec une direction verticale (v) et horizontale (h);
- un ou plusieurs deuxièmes segments de paroi (10) composés d'un ou plusieurs panneaux plats (6), chaque deuxième segment de paroi ayant une forme projetée sensiblement non rectangulaire avec une direction verticale (v) et horizontale (h);
dans laquelle
- des premiers segments de paroi et des deuxièmes segments de paroi (3, 10) sont disposés à proximité les uns des autres le long de leurs bords longitudinaux (4) de manière à former une structure tubulaire,
- chacun des premiers segments de paroi (3) est fabriqué à partir d'une plaque rectangulaire et plate et chacun des deuxièmes segments de paroi (10) est fabriqué à partir d'une plaque trapézoïdale et plate,
- le(s) premier(s) segment(s) de paroi (3) comprenant au moins un coude (5) et le(s) deuxième (s) segment (s) de paroi (10) comprenant un coude (5) le long de la direction verticale du segment de paroi (3, 10) et définissant deux panneaux plats voisins (6), le coude (5) étant prévu à distance d'un bord s'étendant verticalement (4) du segment de paroi (3, 10) de manière à doter le segment de paroi (3, 10) d'une forme concave, et
- chacun des premiers segments de paroi (3) et chacun des deuxièmes segments de paroi (10) est fabriqué à partir de métal, d'acier, d'alumine ou de combinaisons de ceux-ci.

2. Procédé selon la revendication 1, dans lequel:
- les premiers segments de paroi (3) sont de forme égale et sont disposés en rangées s'étendant verticalement (23), et
- les deuxièmes segments de paroi (10.1... 10.6) ont chacun une ligne supérieure (T) et une ligne de base (B) et les deuxièmes segments de paroi sont disposés en rangées s'étendant verticalement (24), rangées voisines s'étendant verticalement de premiers segments de paroi; dans lequel la longueur d'une ligne supérieure (T) d'un deuxième segment de paroi (10.1) est sensiblement de la même longueur que la ligne de base (B) d'un deuxième segment de paroi voisin (10.3) dans une rangée (24) de deuxièmes segments de paroi (10.1... 10.6).

3. Tour selon la revendication 1, dans laquelle les premiers segments de paroi (3) et / ou les deuxièmes segments de paroi (10) dans un élément de tour (2) comprennent chacun
- un seul coude (5), de préférence disposé à une distance équidistante des bords longitudinaux (4) du segment de paroi (3),
- deux coudes (5), de préférence disposés avec la distance entre les deux coudes (5) étant équidistante de la distance d'un coude à un bord longitudinal voisin (4), et / ou
- plus de deux coudes (5), étant de préférence disposés à une distance équidistante entre les coudes (5).

4. Tour selon l'une quelconque des revendications précédentes, dans laquelle un ou plusieurs des premiers segments de paroi (3) dans un élément de tour (2) comprennent
- un seul coude (5), de préférence disposé à une distance équidistante des bords longitudinaux (4) du segment de paroi (3),
- deux coudes (5), de préférence disposés avec la distance entre les deux coudes (5) étant équidistante de la distance d'un coude à un bord longitudinal voisin (4), et / ou
- plus de deux coudes (5), étant de préférence disposés à une distance équidistante entre les coudes (5).

5. Tour selon la revendication 1 ou 3, dans laquelle un ou plusieurs des deuxièmes segments de paroi (10) dans un élément de tour (2) ont une forme projetée triangulaire.

6. Tour selon la revendication 5, dans laquelle le deuxième segment de paroi (10) a une forme projetée triangulaire comprenant un seul coude (5) s'étendant depuis le sommet du segment de paroi (10) jusqu'à un point médian d'un bord horizontal inférieur du segment (10).

7. Tour selon l'une quelconque des revendications 1 ou 4 à 6, dans laquelle un ou plusieurs des deuxièmes segments de paroi (10) dans un élément de tour (2) ont une forme projetée de parallélogramme.

8. Tour selon la revendication 7, dans laquelle un ou plusieurs des deuxièmes segments de paroi (10) ont une forme projetée de parallélogramme comprenant
- un seul coude (5), de préférence étant disposé de manière à donner aux panneaux voisins (6) une forme trapézoïdale.

9. Tour selon l'une quelconque des revendications 1 ou 4 à 6, dans laquelle un ou plusieurs des deuxièmes segments de paroi (10) dans un élément de tour (2) ont une forme projetée trapézoïdale.

10. Tour selon la revendication 9, dans laquelle un ou plusieurs des deuxièmes segments de paroi (10) ont une forme projetée trapézoïdale comprenant
- un seul coude (5), de préférence disposé à une distance équidistante des bords longitudinaux (4) du segment de paroi (3),
- deux coudes (5), de préférence disposés avec la distance entre les deux coudes (5) étant équidistante de la distance d'un coude à un bord longitudinal voisin (4), et / ou
- plus de deux coudes (5), étant de préférence disposés à une distance équidistante entre les coudes (5).

11. Tour selon l'une quelconque des revendications précédentes, dans laquelle deux segments de paroi voisins (3, 10) se chevauchent partiellement le long des bords verticaux (4) et / ou des bords horizontaux et sont attachés les uns aux autres par des boulons, des rivets ou similaires (12) s'étendant à travers le chevauchement et / ou par soudage.

12. Tour selon l'une quelconque des revendications précédentes, dans laquelle les premiers et deuxièmes segments de paroi (3, 10) comprennent des brides (18) le long des bords verticaux (4), des bords horizontaux (7) ou les deux, lesdites brides (18) pointent vers l'intérieur par rapport à la forme concave des segments de paroi (3, 10) et les brides (18) de deux segments de paroi voisins se touchent et sont attachées l'une à l'autre par des boulons, rivets ou similaires (12) s'étendant à travers les brides (18) et / ou par soudage.

13. Tour selon l'une quelconque des revendications précédentes, dans laquelle les premiers segments de paroi (3) et les deuxièmes segments de paroi (10), et leurs nombres, sont sélectionnés de manière à définir un ou des éléments de tour tubulaires (2) ayant un périmètre décrivant un polygone, de préférence avec un nombre de côtés impair.

14. Tour d'éolienne selon l'une quelconque des revendications précédentes, dans laquelle
- la tour comprend une pluralité de premiers segments de paroi (3) disposés / agencés les uns au-dessus des autres avec leurs bords verticaux (4) s'étendant le long d'une ligne sensiblement droite de manière à former une section (14) s'étendant dans une direction verticale de la tour et ayant une forme projetée sensiblement rectangulaire.

15. Tour selon la revendication 14, dans laquelle la tour comprend en outre un moyen d'ancrage (15) disposé au niveau des bords verticaux de la section rectangulaire (14).

16. Tour selon la revendication 15, la tour comprenant en outre une grue (13) fixée au moyen d'ancrage (15).

17. Tour selon la revendication 14 ou 15, dans laquelle le moyen d'ancrage (15) comprend deux rails (16) s'étendant verticalement le long des bords verticaux de la section rectangulaire (14) et parallèlement l'un à l'autre et dans laquelle ladite grue (13) engage les rails d'une manière mobile verticalement.

18. Tour selon la revendication 17, comprenant en outre un dispositif de tracteur (17) configuré pour déplacer la grue le long des rails (16).
